# EUROPÄISCHE PATENTSCHRIFT

(11) **EP 2 118 356 B1**
(45) Veröffentlichungstag und Bekanntmachung des Hinweises auf die Patenterteilung: **29.12.2010**
(21) Anmeldenummer: 08715552.9
(22) Anmeldetag: 07.03.2008
(51) Int. Cl.: D06F 37/20, F16F 7/09

(54) **REIBUNGSDÄMPFER, INSBESONDERE FÜR TROMMELWASCHMASCHINEN**
FRICTION DAMPER, PARTICULARLY FOR DRUM WASHING MACHINES
AMORTISSEUR À FRICTION DESTINÉ NOTAMMENT À DES LAVE-LINGE À TAMBOUR

(30) Priorität: 08.03.2007 DE 102007011713
(43) Veröffentlichungstag der Anmeldung: 18.11.2009
(73) Patentinhaber: AWECO APPLIANCE SYSTEMS GmbH & Co. KG, 88099 Neukirch (DE)
(72) Erfinder: DILLMANN, Gerold, 88239 Wangen (DE); NGUYEN, Ba Loc, 88099 Neukirch (DE); NENNING, Peter, 88175 Scheidegg (DE)
(74) Vertreter: Roth, Klaus
(86) Internationale Anmeldenummer: PCT/DE2008/000408
(87) Internationale Veröffentlichungsnummer: WO 2008/106959

(56) Entgegenhaltungen:
- DE-A1- 1 947 133
- DE-A1- 2 314 955
- US-A- 4 475 363
- US-A- 5 133 435

## Beschreibung

Die vorliegende Erfindung betrifft einen Reibungsdämpfer sowie ein Verfahren zu dessen Herstellung nach dem Oberbegriff des Anspruchs 1.

### Stand der Technik

Reibungsdämpfer haben vorzugsweise die Aufgabe, Schwingungen an mechanisch bewegten Elementen, wie z.B. aufgrund von Unwuchten hervorgerufene Auslenkungen von Waschtrommeln an Waschmaschinen, abzufangen bzw. zu eliminieren. Ein solcher Reibungedämpfer ist beispielsweise aus der DE 10 2004 033 531 bekannt.

In der Druckschrift DE 23 14 955 ist ein Reibungsdämpfer mit Reibkörpern offenbart, die über ein Spreizelement gegen die Wand des Gehäuses gedrückt werden. Hierbei ist der Reibbelag im Freihubfall vom Spreizkörper beabstandet.

Nachteilig hierbei ist jedoch, dass eine Anpassung bei Abrieb des Reibbelages nicht realisiert werden kann.

### Aufgabe und Vorteile der vorliegenden Erfindung

Gegenüber dem vorgenannten Stand der Technik hat die vorliegende Erfindung die Aufgabe, die Verstellung des Reibbelags zu verbessern bzw. ein nachteiliges oder verändertes Verhalten des Reibbelages bei einem Abrieb wirkungsvoll zu verhindern.

Die Lösung dieser Aufgabe erfolgt durch den Anspruch 1. In den Unteransprüchen sind vorteilhafte und zweckmäßige Weiterbildungen angegeben.

Im Unterschied zum Stand der Technik ist der Reibungsdämpfer der vorliegenden Erfindung derart ausgebildet, dass der Reibbelag am Stößel beweglich angeordnet ist und dass das Führungselement unter einer Vorspannung zwischen dem Reibbelag und einer ihm zugeordneten Führungs- bzw. Gleitfläche angeordnet ist und dass der Spreizkörper zur Einstellung der reibungawirksamen geometrischen Abmessung und/oder der zur Verspannung des Reibbelags vorgesehen ist, um die Reibkraft zwischen Reibbelag und einer zugeordneten Gleitfläche zu beeinflussen, und dass der Spreizkörper als dem Reibbelag zugeordnetes Fixier- bzw. Ankerelement des Führungselementes ausgebildet ist.

Mittels eines Spreizkörpers gemäß der Erfindung ist es möglich, den Reibbelag bzw. einen den Reibbelag tragenden Körper zu deformieren oder, wenn der Verformbarkeit des Reibbelags und/oder eines den Reibbelag betreffenden Körpers durch äußere Bauelemente Grenzen gesetzt sind, zu verspannen.

Durch Deformierung kann die wirksame Fläche des Reibbelags beeinflusst werden, während durch das Verspannen der Druck der Reibflächen des Reibbelags auf eine zugeordnete Gleitfläche, auf der der Reibbelag im Betrieb unter Reibung gleiten kann, beeinflusst werden kann. Durch beide Effekte ist das Reibungsverhalten des Reibbelags zu beeinflussen. Selbstverständlich können auch beide Effekte gleichzeitig genutzt werden.

Zur Weiteren positiven Einflussnahme auf die Gleiteigenschaften des Reibbelags im Gehäuseinneren bzw. am Stößel, und insbesondere in einem Fenster des Stößels, ist gemäß der Erfindung ein Führungselement für den Reibbelag vorgesehen werden. Hierdurch ist es beispielsweise möglich, den Reibwiderstand zwischen dem Reibbelag und einer entsprechend zugeordneten Gleitfläche am Stößel, die insbesonders im Inneren des Fensters angeordnet sein kann, zu reduzieren. Besonders vorteilhaft wirkt es sich aus, wenn zwischen dem Reibbelag und der Führungefläche kein direkter Kontakt gegeben ist, so dass einerseits der Reibwiderstand zwischen diesen beiden Elementen reduziert wird und andererseits wiederum die Überlagerung von ruckbedingten Schwingungen, hervorgerufen durch zeitweise Haftreibung zwischen dem Reibbelag und einer komplementären Gleitfläche, zuverlässig verhindert werden.

Gemäß der Erfindung ist das Führungselement unter Vorspannung zwischen dem Reibbelag und der ihm zugeordneten Führungs- bzw. Gleitfläche eingespannt. Hierdurch ergibt sich eine dauerhaft saubere Führung für den Reibbelag bei entsprechender Schwingungsbeaufschlagung des Reibungsdämpfers, und zwar auch bei Betriebsdauer bedingter Abnutzung des Führungselementes und/oder der ihr zugeordneten Gleit- bzw. Führungsfläche für den Reibbelag. Die Vorspannung zwischen dem Führungselement und der Führungs- bzw. Gleitfläche kann z.B. durch eine elastische Eigenschaft des Reibbelags realisiert werden.

Erfindungsgemäß ist der Spreizkörper zur Beeinflussung des Reibverhaltens und zur Einstellung der reibungswirksamen geometrischen Abmessung und/oder der Verspannung des Reibungsbelags ausgebildet. Das heißt, mit einem derartigen Spreizkörper kann die reibungswirksame Ausdehnung, zum Beispiel die Dicke des Reibbelags bzw. durch dessen Verspannung der Druck des Reibbelags auf die zugehörige Gleitfläche nach entsprechenden Vorgaben beeinflusst werden. Insbesondere ist es hiermit möglich, fertigungsbedingte Toleranzen des Reibungsbelags auszugleichen. Aber auch eine Anpassung eines bestimmten Reibungsbelags an eine ganz bestimmte Anwendung mit vorgegebenen Reibungswerten ist hierdurch möglich.

Hinsichtlich fertigungsbedingter Abmessungstoleranzen ist z.B. eine Kategorisierung möglich, die die Reibungsbeläge nach entsprechender Prüfung, z.B. in fünf verschiedene Klassen einteilt. Entsprechend der jeweiligen Klasse kann dann ein speziell in seinen geometrischen Abmaßen abgestimmter Spreizkörper für einen ganz bestimmten Anwendungsfall vorgesehen werden. Die geometrischen Abmaße beziehen sich hierbei insbesondere auf die die Dicke des Reibbelags beeinflussenden Höhenabmaße des Spreizelementes. Zum Beispiel kann ein solcher Spreizkörper die Form eines Rechtecks aufweisen, gegebenenfalls mit abgeechrägten Kanten versehen, der in die als Schlitz ausgebildete Aufnahme des Reibbelags eingeschoben werden kann.

Zudem ist der erfindungsgemäße Spreizkörper als dem Reibbelag zugeordnetes Fixier- bzw. Ankerelement des führungselementes für den Reibbelag ausgebildet. Damit kann dieses Führungselement gleichzeitig beide Funktionen - Führung und spreizung des Reibbelags - in sich vereinen. Ein zusätzlicher Vorteil liegt darin, dass aufgrund der Elastizität des Reibbelags die Vorspannung für die Führungsfunktion des Führungselementes mit realisiert werden kann, so dass in Abhängigkeit von betriebsbedingt auftretender Abnutzung das Führungselement wieder rückwärts aus der schlitzförmigen Aufnahme aus dem Reibkörper heraus und gegen die ihr zugeordnete Gleit- bzw. Führungsfläche am Fenster des Stößels gedrückt wird.

Die Herstellung eines Gehäuses aus Kunststoff bietet eine ganze Reihe von Vorteilen Einerseits können Formen und Geometrien in nahezu beliebiger Gestaltung realisiert werden, und zwar sowohl bei mehrteiligen als auch bei eintelligen, z.B. geschlossenen Gehäuseformen. Hierzu bietet sich insbesondere die Spritzgusstechnik an, insbesondere durch die Ausbildung einteiliger Bauteilkomponenten kann damit auch die Gesamtzahl der Einzelteile eines solchen Reibungsdämpfers reduziert werden. Ein weiterer Vorteil liegt in den vergleichsweise niedrigen Investitionskosten für die Bereitstellung der für die Herstellung erforderlichen Mittel.

Durch die nahezu unbeschränkte Möglichkeit der Gestaltung von Kunststoffoberflächen kann das Gehäuse des Reibungsdämpfers ideal an die betriebsbedingten Erfordernisse in seiner Struktur angepasst werden. Beispielsweise kann es mit Strukturelementen versehen werden, die auch unterschiedlichen Funktionen dienen können. In einer ersten Ausführungsform kann beispielsweise im Berührungsbereich des Gehäuses mit dem Reibbelag eine die Gleiteigenschaften des Reibbelags an der Berührfläche des Gehäuses positiv beeinflussende Struktur vorgesehen werden. Zum Beispiel ist die Anordnung abgerundeter Rippen denkbar, so dass der Reibbelag mit einer möglichst sanften Widerstandserhöhung bei seiner Relativbewegung gegenüber dem Gehäuse beaufschlagt wird und somit die zusätzliche Einbringung von Schwingungen aufgrund der Überwindung von Haftreibungswiderständen vermieden werden kann.

Aber auch die Ausbildung oder Anordnung von Schmiermitteltaschen zur Reduzierung des Haft- bzw. Gleitwiderstands zwischen dem in eingebautem Zustand gegen einen Gehäusebereich gepressten Reibbelag und diesem Gehäusebereich kann hierdurch einfach und vorteilhaft realisiert werden.

Um das Problem der reibungsbedingten Wärmeentwicklung auch bei einem aus Kunststoff gefertigten Gehäuse möglichst gering halten zu können, wird im Weiteren die Verwendung von wärmeleitfähigen Materialanteilen im Kunststoff vorgeschlagen, so dass hierdurch bei Reibung entstehende Wärme gut nach außen abgeführt werden kann.

Weitere Maßnahmen zur Verbesserung der thermischen und/oder mechanischen Eigenschaften des Reibungsdämpfers können die Ausbildung von die Oberfläche des Gehäuses vergrößernden und/oder versteifenden bzw. verstärkenden Lamellen und/oder Rippen umfassen. Durch die Vergrößerung der Oberfläche ist eine bessere Wärmeabfuhr möglich, durch geradlinig geführte Konturen kann des Abstrahleigenschaft solcher Kühlrippen bzw. Kühllamellen auch noch ein Durchsatz der den Reibungsdämpfer umgebende Luft abgestoßen bzw. verstärkt werden um noch einen zusätzlichen Kühleffekt zu bewirken. Auch die Anordnung von Aussparungen im Gehäuses, z.B. zwischen einzelnen Verstärkungs- bzw. Kühlrippen und/oder Lamellen kann die Abfuhr der durch die Dämpfreibung erzeugten Wärme zum Teil maßgeblich unterstützen.

Hinsichtlich der Verstärkungseigenschaften solcher Kühl- bzw. Versteifungsrippen bzw. Lamellen ist insbesondere ein aus Kunststoff gefertigtes Gehäuse leicht an bestimmte Anforderungen in seiner Kontur bzw. in der Kontur der versteifenden Lamellen und/oder Rippen anpasshar. Durch die Integration solcher Rippen bzw. Lamellen in das Gehäuse können beide in einem einzigen Arbeitsvorgang hergestellt werden.

Als weiteres erfindungswesentliches Merkmal wird vorgeschlagen, dass der Reibbelag ein Prallelement zum Abbremsen einer Bewegung des Reibungsbelags umfasst, insbesondere als in ihm integriertes Element. Dadurch kann der Reibbelag vorteilhafterweise als einstückiges Teil ausgebildet werden, was wiederum in vorteilhafter Weise zur Reduzierung der Gesamtzahl der Einzelteile des Reibungsdämpfers beiträgt.

Das Prallelement ist vorzugsweise an einer Stirnseite in Bewegungsrichtung des Reibbelags angeordnet, in einer besonders bevorzugten Ausführungsform an beiden Stirnseiten. Durch eine entsprechende Konturgebung dieses bzw. dieser Prallelemente kann einerseits Einfluss auf die Dämpfungseigenschaft dieser Prallelemente genommen werden, vorzugsweise unter Berücksichtigung der Dämpfungseigenschaften des verwendeten Materials, und andrerseits ein weiterer Beitrag zur Reduzierung der Haftreibung aufgrund entsprechender Konturierung der bei einer Verschlebebewegung mit dem Gehäuse als erstes in Berührung kommenden Kantenbereiche. Besonders vorteilhaft werden hierzu abgeschrägte oder abgerundete Kanten angesehen, die eine möglichst sanfte Widerstandserhöhung bei einer Lengsverschiebung des Reibbelags ermöglichen.

In einer möglichen Ausführungsform kann hierzu eine Aufnahme für das Führungselement im bzw. am Reibbelag bzw. einem den Reibbelag tragenden Körper vorgesehen sein. Diese kann beispielsweise als den Reibbelag und/oder den Körper des Reibbelags zumindest abschnittsweise teilender Schlitz ausgebildete sein. Bei einer derartigen Ausführungsform bildet der Reibbelag um diese schlitzförmige Aufnahme eine Art Ringform aus, die ganz grob beschrieben einer in Längsrichtung in der Mitte geschlitzten, abgeschrägte, z.B. eine Dreiecksform aufweisende Stirnseiten umfassenden Radiergummikontur entspricht.

Im Weiteren wird es alls vorteilhaft angeschen, wenn ein Anschlag als Widerlager für ein Prallelement vorgesehan ist. Dieser kann insbesondere an der dem Prallelement gegenüberliegenden Stirnseite, z.B. im Inneren eines gegebenenfalls vorgesehenen Aufnahmefensters für den Reibbelag ausgebildet sein, Beispielsweise können hierzu entlang der Stirnkante des Prallelementes verteilt angeordnet mehrere axial fluchtende Rippen vorgesehen sein. Diese bieten den Vorteil, dass sie für eine gegebenenfalls erforderliche Längenanpassung des Aufnahmefensters für den Reibbelag vergleichsweise einfach in ihrer Längenauadehnung veränderbar sind, z.B. durch ein dem Herstellungsverfahren nachgeordnetes Materialabtrageverfahren. Denkbar ist aber auch eine durchgehend flächige Anlage als Widerlager für die ihr zugeordnete Kante des Prallelamentes. Bei ausreichend vorgesehenem Material kann auch hiervon zur Längenanpassung ein entsprechender Materialabtrag durchgeführt werden.

Je nach gewünschter Ausführungsform und Funktion des Reibungsdämpfers kann ein Freihub für den Reibbelag vorgesehen sein. Das heißt, der Reibbelag ist um eine bestimmte Abmessung in seiner Längenausdehnung kleiner als die innere Abmessung zwischen den Anschlagsflächen der Reibbelagaufnahme. Ein solcher Freihub hat den Vorteil, dass im Anwendungsfall auftretende, in der Amplitude innerhalb dieses Freihubs liegende Schwingungen vom Reibungsdämpfer nicht durch dessen Reibbelag gedämpft werden. Da insbesondere bei Waschmaschinen dies der größte Anteil an an Waschmaschinentrommeln auftretenden Schwingungen ausmacht, wird dadurch keine Reibungswärme in das Reibdämpfersystem induziert. Für die mechanische Belastung der Waschtrömmelaufhängung und der Lagerung spielen diese niederhubigen Schwingungen jedoch in der Regel keine Rolle, so dass diese insbesondere bei kostengünstigen Lösungen durchaus akzeptabel sind.

In einer davon abgewandelten Ausführungsform ist es aber auch möglich, dass das Prallelement ohne Freihub ausgebildet ist, also das Prallelement im unbelasteten Zustand des Reibungsdämpfers am Anschlag anliegend positioniert ist, und zwar auf beiden seinen Bewegungsweg beschränkenden Stirnseiten.

Der Reibungsdämpfer kann im Weiteren beispielsweise eine lineare Kraft-Weg-Kennlinie aufweisen. Aber auch eine nicht lineare Kraft-Weg-Kennlinie für den Reibungsdämpfer ist denkbar.

Bei Kenntnis dieses Kraft-Weg-Kennlinie kann insbesondere in Kombination mit einem zur Erfassung einer Längenänderung des Reibungsdämpfers vorgesehenen Sensor auf die die Längenänderung hervorrufende Krafteinwirkung rückgeschlossen werden. In einem statischen Anwendungsfall ist es so z.B. möglich, in Kombination mit einer entsprechenden Kontrolleinheit den Beladungszustand einer durch den Reibungsdämpfer beeinflussten Einheit, z.B. einer Waschtrommel, zu ermitteln. Auf der Basis dieser Information kann beispielsweise im Weiteren Einfluss auf den weiteren Betriebsablauf des betreffenden Gerätes, z.B. der Waschmaschine, dahingehend Einfluss genommen werden, dass verschiedene Betriebsparameter genau an diese Beladung angepasst werden. Denkbar ist hierbei beispielsweise die Beeinflussung von zuzugebendem Waschmittel Wassere oder dergleichen.

Für einen dynamischen Anwenduhgsfall, also z.B. den Betriebsfall eines Schleudervorgangs, kann die Erfassung der Längenänderung des Reibungsdämpfers zur Einleitung von Korrekturmaßnahmen hinsichtlich einer ungünstigen, die Betriebsfestigkeit des Reibungsdämpfers gefährdenden oder übersteigenden Unwucht durch eine entsprechend angeschlossene Kontrolleinheit veranlasst werden. Als eine erste mögliche Reaktion wäre eine zeitliche Reduzierung einzelner Schleuderabschnitte, gegebenenfalls mit Zwischenschaltung von Ruhepausen möglich, in denen beispielsweise die induzierte, zu hohe Wärme abgeführt werden kann. Eine andere Möglichkeit besteht im der Einleitung eines neuen Verteilvorgangs der Beladung des in seiner Schwingung zu dämpfenden Anlagenteils, bei der Waschmaschine also z.B. eine neue Verteilung der Wäsche in der Wäschetrommel, durch bereits bekannte Maßnahmen. Durch derartige Eingriffe in den die zu dämpfenden Amplituden verursachenden Vorgang ist auch eine Optimierung in der Anpassung der mechanischen Festigkeit eines derartigen Reibungsdämpfers an maximal auftretende Belastungen in dem von ihm zu dämpfenden System möglich. Das heißt, hierdurch ist wiederum eine Material- und Kostenersparnis, möglich.

Das Prallelement und/oder der Reibbelag könnten in einer besonders bevorzugten Ausführungsform im Wesentlichen aus einem Elastomer und/oder Schaumstoff, insbesondere einem PU-Schaum und/oder Gummimaterial bestehen. Mit diesen Materialien ist eine verhältnismäßig einfache Bearbeitung bei der Herstellung dieser Bauteile möglich. Dies wirkt sich im Weiteren auch positiv auf die insgesamt erforderlichen Materialkosten für einen solchen Reibungsdämpfer aus.

Eine Anpassung des Reibwertes ist insbesondere durch das Bestücken des Reibbelags mit einem entsprechend ausgebildeten Spreizkörper möglich. Dieser Spreizkörper kann. z.B. eine vom geforderten Reibwert des Reibbelags abhängige, Spreizdicken wirksame geometrische Abmessung aufweisen. Das heißt, der Reibbelag wird mit einem Spreizkörper bestückt, der genau so viel in der Dicke des Reibbelags aufträgt, dass der Reibbelag nach seiner Bestückung den geforderten Reibwert aufweist. Mit der Anordnung eines solchen Spreizkörpers im Reibbelag sind neben der Toleranzeinpegelung der reibbeläge hinsichtlich ihrer Reibwerte aber auch Anpassungen solcher Reibbeläge an ganz bestimmte Anwendungsanforderungen möglich. Beispielsweise kann somit mit ein desselben Reibbelag sowohl ein Anwendungsfall mit einend geforderten niedrigen Reibwert zufriedenstellend bestückt werden als auch, z.B. mit einem entsprechend dickeren Spreizkörper, ein Anwendungsfall mit einem geforderten, vergleichsweise hohen Reibwert.

### Ausführungsbeispiel

Ein Ausführungsbeispiel der Erfindung ist in den nachfolgenden Zeichnungen dargestellt und wird anhand der Figuren nachfolgend näher erläutert.

Im Einzelnen zeigen:
- Figur 1.: beispielhaft eine perspektivische Ansicht auf einen Reibungsdämpfer,
- Figur 2: eine perspektivische Ansicht auf ein Gehäuse eines Reibungsdämpfers,
- Figur 3: eine Innenansicht des Gehäuses des Reibungsdämpfers,
- Figur 4: aschematisch eine abschnittsweise Darstellung eines als Berührungsbereich fungierenden Innenbereichs des Gehäuses des Reibungsdämpfers, gespiegelt entlang einer Achse und gegenüberliegend zu dem gehäuseseitigen Ende einen in dem Gehäuses beweglich gelagerten und mit einem Reibbelag versehenen Stößel,
- Figur 5: abschnittsweise eine perspektivische Außenansicht des Reibungsdämpfergehäuses in dessen befestigungsseitigem Endäbschnitt,
- Figur 6: beispielhaft eine perspektivische Ansicht auf einen Stößel des Reibungsdämpfers,
- Figur 7: beispielhaft eine perspektivische Ansicht auf einen Reibungsbelag,
- Figur 8: beispielhaft eine perspektivische Ansicht auf einen Stößel mit explosionsartig herausgezogenem Reibbelag und Führungselementen und die
- Figuren 9 und 10: beispielhaft abschnittweise Darstellungen in schräger perspektivische Draufsicht auf einen Stößel mit einem Schnitt durch das in den Figuren 6 und 8 gezeigte Reibbelag- Aufnahmefenster.

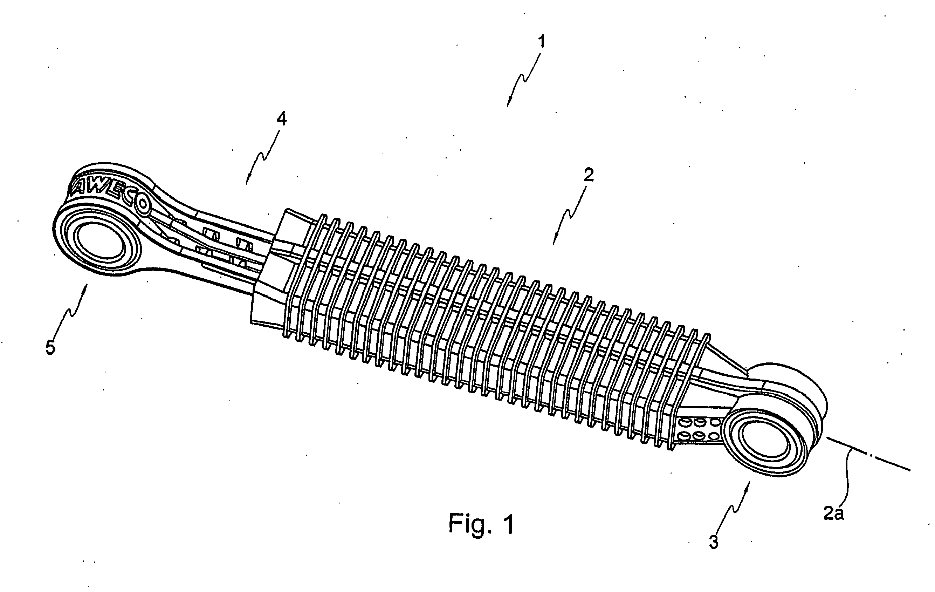

Im Detail zeigt' nun die Figur 1 einen Reibungsdämpfer 1, bestehend aus einem Gehäuse 2 und einer diesem zugeordneten Befestigungsöse 3 sowie einem in dem Gehäuse 3 beweglich angeordneten Stößel 4 mit einer Befestigungsöse 5.

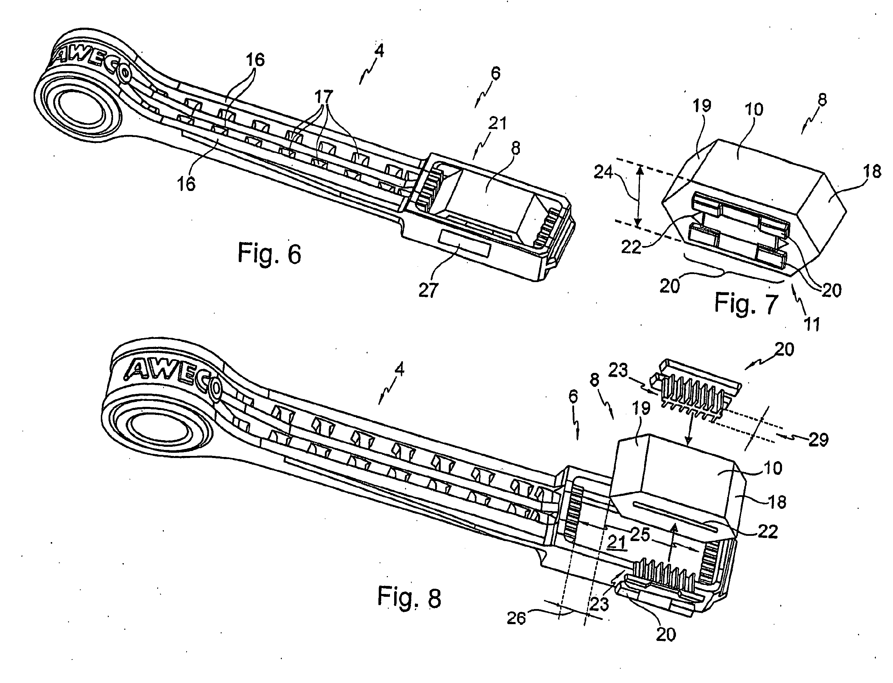

Die Innenseite des Gehäuses 2 ist zumindest abschnittsweise als Anlagefläche für einen an dem Stößel 4 angeordneten Reibbelag (Figuren 6 bis 8) vorgesehen und das ganze Gehäuse 2 erfindungsgemäß aus Kunststoff gefertigt.

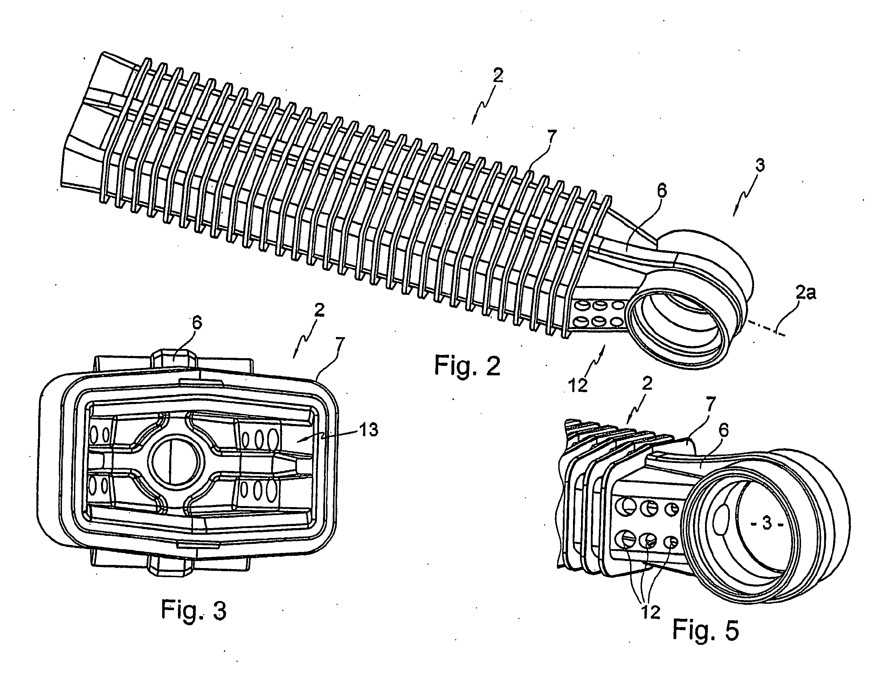

Die Figur 2 zeigt eine perspektivische Draufsicht auf das aus Kunststoff gefertigte Gehäuse 2 eines Reibungsdämpfers 1. Das Gehäuse 2 ist z.B. zur Verstärkung und/oder zur Abfuhr von Wärme mit einer in etwa parallel zur einer Gehäuselängsachse 2a verlaufenden, an der Außenseite rund um das Gehäuse angeordneten Längsrippe 6 versehen. Quer zu dieser Längsrippe und somit auch quer zur Gehäuselängsrichtung ausgerichtet sind im Weiteren über die Gehäuseaußenfläche verteilt Querrippen 7 angeordnet. Die Struktur der Längs- und Querrippen sind beispielhaft dargestellt und können durchaus auch andere Formen aufweisen, z.B. optimiert auf Einbau- bzw. Betriebsbedingungen hin. Das Gehäuse selbst ist hier zwar im Wesentlichen geschlossen dargestellt, es weist lediglich in seinem befestigungsseitigen Endbereich Be- bzw. Entlüftungslöcher 12 auf. Denkbar ist aber auch ein über z.B. größere Bereiche geöffnetes Gehäuse, um beispielsweise eine bessere thermische Funktion durch bessere Wärmeabfuhr realisieren zu können.

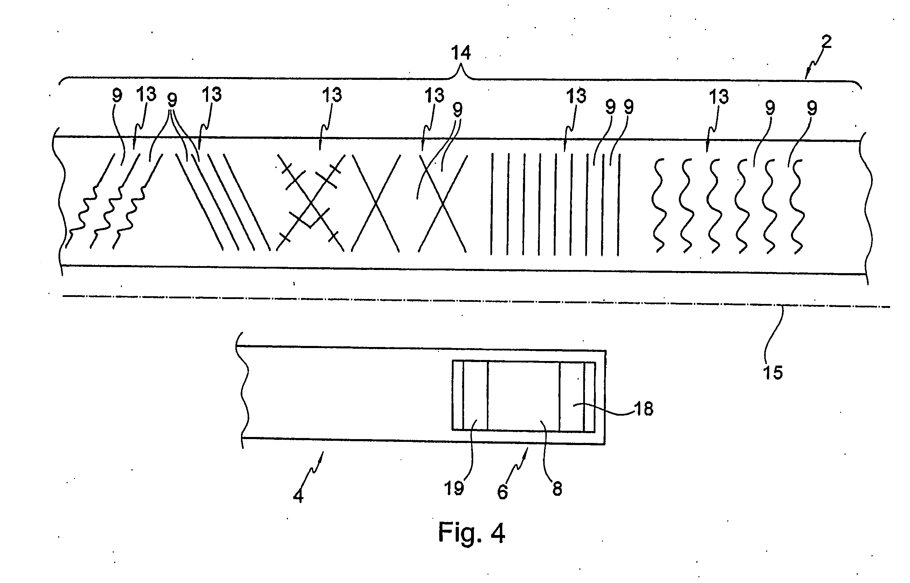

Die Figur 3 zeigt eine Innenansicht des Gehäuses 2 mit einer ersten beispielhaften Innenstruktur 13. Weitere beispielhafte Formen von im Berührungsbereich mit dem Reibbelag 8 ausgebildeten Strukturelementen 13 sind in der Figur 4 beispielhaft dargestellt. Mögliche Konturen sind z.B. in der Draufsicht schräg ausgerichtete, gerade geformte Rippen und/oder Lamellen, gegebenenfalls überlagert mit Wellenformen, gekreuzte Elemente, gegebenenfalls überlagert mit weiteren Kreuzen oder Wellenformen, im Wesentlichen quer zur Längserstreckung des Innengehäuses verlaufende, gerade Rippen und/oder Lamellen, quer ausgerichtete wellenförmig Rippen oder Lamellen und dergleichen mehr. Ihre Zwischenräume sind beispielsweise zur Ausbildung und/oder Aufnahme von Schmiermitteltaschen 9 geeignet, in welche zur Reduzierung der Haftreibung des Reibbelags Schmiermittel, z.B. Fett, deponiert werden kann. Denkbar ist aber auch die Ausbildung speziell geformte Schmiermitteltaschen über bestimmte Bereiche des Berührungsbereichs hinweg an der Innenseite des Gehäuses.

Die in der oberen Hälfte der Figur 4 dargestellten Strukturelemente 13 sind entlang einer Achse 15 zum Stößel 4 gespiegelt ausgerichtet abgebildet. Vom Stößel 4 ist lediglich dessen im Gehäuse 2 beweglich gelagertes Ende dargestellt. An ihm ist ein Reibbelag 8 angeordnet, der bei einer Längenänderung des Reibungsdämpfers 1 gegenüber den Strukturelementen 13 bewegt wird.

Die Figur 5 zeigt beispielhaft abschnittsweise eine perspektivische Außenansicht des Gehäuses in dessen Befestigungsbereich. Hierin ist die oberflächenvergrößernde Struktur, insbesondere der Querrippen 7 für die Verbesserung einer Wärmeabfuhr gut zu erkennen. Neben dieser Wärmeabfuhrfunktion ist aber, insbesondere aufgrund der rundumlaufend ausgeprägten Struktur dieser Quer- und Längsrippen 6, 7 auch eine deutliche Erhöhung der mechanischen Festigkeit dieses aus Kunststoff gefertigten Gehäuses 2 des Reibungsdämpfers 1 erkennbär. Zur weiteren Optimierung der thermischen Eigenschaften dieses aus Kunststoff gefertigten Gehäuses kann dieses zusatzlich wärmeleitende Materialien enthalten.

Die Figur 6 zeigt beispielhaft eine perspektivische Draufsicht auf einen ihm Gehäuse 2 beweglich geführten Stößel 4. Der daran zumindest teilweise beweglich angeordneten Reibbelag 8 dient zur Dämpfung einer Längenänderung des Reibungsdämpfers aufgrund einer, z.B. durch Unwucht hervorgerufenen mechanischen Schwingung.

Auch der Stößel 4 weist verstärkende Längs- und Querrippen 16, 17 auf, was sich insbesondere bei der Herstellung des Stößels 4 aus Kunststoff wiederum sowohl hinsichtlich der Verbesserung seiner mechanischen Festigkeit als auch hinsichtlich seiner thermischen Funktion vorteilhaft auswirken kann.

Die Figur 7 zeigt, wiederum beispielhaft, in perspektivischer Draufsicht eine mögliche Ausführungsform eines Reibbelags 8. Dieser Reibbelag 8 umfasst mindestens ein Prallelement 18, 19 an einer in seiner Bewegungsrichtung gesehen angeordneten Stirnseite. In der gezeigten Ausführungsform ist an beiden Stirnseiten ein solches Prallelement 18, 19 ausgebildet. Diese Prallelemente dienen dazu, die Bewegung des am Stößel 4 beweglich angeordneten Reibungsbelags 8 bei Berührung mit entsprechend zugeordneten Anschlagflächen zu begrenzen und die Bremsbewegung zu dämpfen. Vorzugsweise, wie hier in diesem Ausführungsbeispiel gezeigt, ist der Reibbelag hierbei einstückig ausgebildet. D.h. in diesem Ausführungsbeispiel sind sowohl der Reibbelag 8 als auch die beiden Prallelement 18, 19 aus ein und demselben Werkstück bzw. Material gefertigt.

Seine Reibflächen 10 und 11 sind vorzugsweise im Wesentlichen als ebene Flächen ausgebildet, so dass der Reibbelag 8 im Querschnitt z.B. eine.rechteckige Form aufweist.

Um eine gute Führung für den am Stößel 4 beweglich angeordneten Reibbelag ermöglichen zu können, sind im Weiteren Führungselemente 20 vorgesehen. Diese Führungselemente 20 können z.B. an den zwischen den beiden Reibflächen 10, 11 liegenden Seitenflächen am Reibbelag 8 angeordnet bzw. mit diesem verbunden werden. In einer besonders bevorzugten Ausführungsform werden diese Führungselemente 20 unter einer Vorspannung zwischen dem Reibbelag 8 und einer dem jeweiligen Führungselement zugeordneten Führungs- bzw. Gleitfläche 21 angeordnet. Dies hat den Vorteil, dass betriebsbedingte Abnutzungen am Führungselement und/oder an der ihre zugeordneten Führungsbzw. Gleitfläche 21 keinen Luftspalt erzeugen können, welcher sich nachteilig auf die Führungseigenschaften auswirken würde. Eine mögliche nachteilige Auswirkung wäre z.B. eine ruckartige Führung des Reibbelags durch das Führungs- bzw. Gleitelement, so dass hierdurch Schwingungen in das Dämpfungssystem induziert werden würden. Durch die permanente Vorspannung kann jedoch sichergestellt werden, dass solche Störungen zuverlässig verhindert werden. Weiterhin ist hierdurch gewährleisten, dass auch der Reibbelag selbst keine solchen Ruckbewegungen verursachen kann, die z.B. durch anderenfalls gegebenenfalls auftretende Walkbewegungen des Reibbelags an der Gleitfläche 28 hervorgerufen werden könnten.

In einer weiter bevorzugten Ausführungsform kann der Reibbelag 8 in einem Fenster geführt werden, insbesondere in einem am Stößel 4 ausgebildeten Äufnahmefenster, wie in den Figuren 6 und 8 dargestellt. Hierdurch ist es möglich, den Reibbelag beweglich zu lagern aber dennoch fest am Stößel 4 zu fixieren.

In der Darstellung der Figur 7 ist der Reibbelag 8 gegenüber der. Darstellung der Figur 8 gespreizt gezeigt. Die Spreizung erfolgt durch das Einbringen des Führungselementes 20 in die den Reibbelag abschnittsweise teilende, schlitzförmig ausgebildete Aufnahme 22.

Das Führungselement 20 umfasst somit in einer besonders bevorzugten Ausführungsform gleichzeitig einen Spreizkörper 23 zur Einstellung der reibungswirksamen geometrischen Abmessung 24 zwischen den beiden Reibflächen 10 und 11 des Reibbelags 8. Somit ist der Spreizkörper 23 als dem Reibbelag 8 zugeordnetes Fixier- bzw. Ankerelement des Führungselementes 20 ausgebildet.

Im Weiteren sind für die Prallelemente 18, 19 jeweils ein Anschlag 25 als Widerlager vorgesehen. In der Ausfuhrungsform der Figuren 6 und 8 sind diese Anschlage 25 jeweils stirnseitig im Fenster 6 angeordnet und können einen gegebenenfalls vorgesehenen Freihub 26 für den Reibbelag 8 begrenzen. Für den Fall, dass kein Freihub für den Reibbelag vorgesehen ist, liegen die Prallelement 18, 19 in unbelasteten Zustand des Reibungsdämpfers 1 jeweils an dem ihm zugeordneten Anschlag 25 an. Diese Ausführungsformen sind für Anwendungsfälle vorgesehen, bei denen alle Auslenkungen eines mit einem derartigen Reibungsdämpfer versehnen Aggregates gedämpft werden sollen.

Zur Erfassung von Krafteinwirkungen auf das durch den Reibungsdämpfer dargestellte Dämpfungssystem kann dieses eine lineare Kraft-Weg-Kennlinie aufweisen, welche beispielsweise über einen Wegsensor 27 (Figur 6) zur Weiterleitung an eine entsprechend geeignete Kontrolleinheit erfasst werden kann. Darauf basierend kann nachfolgend gegebenenfalls auf bestimmte Programmabläufe Einfluss genommen werden.

Denkbar ist aber auch eine nicht lineare Kraft-Weg-Kennlinie für den Reibungsdämpfer. Entscheidend für die Erfassung der Krafteinwirkung ist die Kenntnis der gesamten Federkonstanten des durch den Reibungsdämpfer gedämpften Aggregats.

Zur Herstellung des Reibbelags 8 und/oder des Prallelementes 18, 19 wird bevorzugt die Verwerdung eines Elastomers und/oder eines Schaumstoffs, insbesondere eines PU-Schaumstoffs und/ode eines Gummimaterials vorgeschlagen.

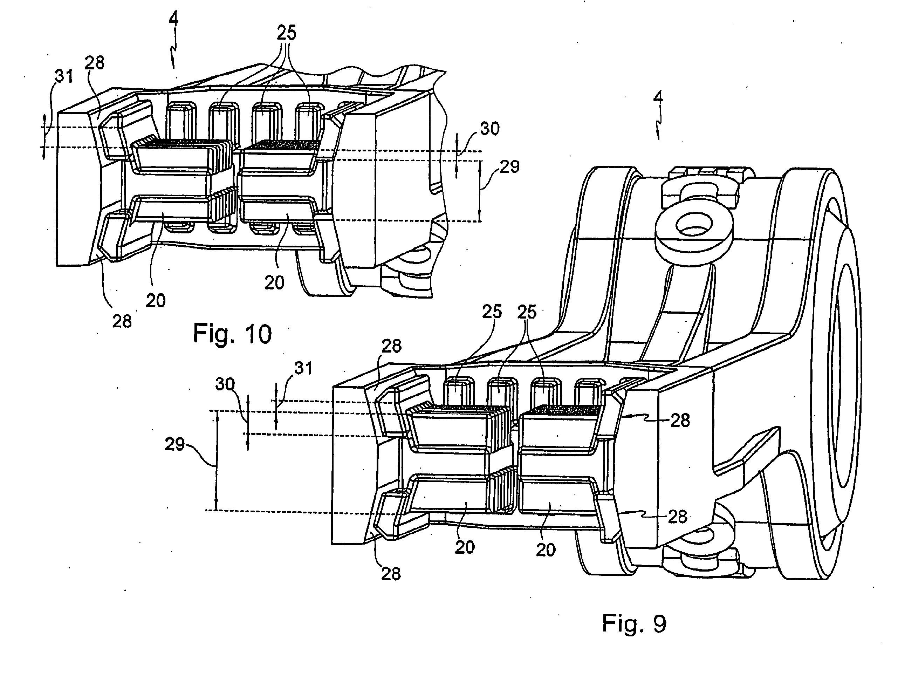

In den Figuren 9 und 10 sind jeweils beispielhaft schräge Draufsichten auf einen Stößel 4 gezeigt, bei denen ein Schnitt quer durch das Fenster 6 verläuft. Im Wesentlichen geht es bei diesen Darstellungen darum, zu zeigen, dass die beiden Führungselemente 25, die hier ohne den Reibbelag 8 dargestellt sind, unterschiedliche Spreizhöhen 29 aufweisen. Diese Spreizhöhen 29 beeinflussen die reibungswirksame Abmessung 24 des Reibbelags 8 dahingehend, dass sie den Abstand zwischen den beiden Reibflächen 10, 11 bei in den Reibbelag 8 eingestecktem Zustand wesentlich mitbestimmen. Hierdurch ist eine Anpassung des Reibbelags 8 an bestimmte Anforderungen möglich bzw. auch eine Korrektur von fertigungstechnisch bedingten Abweichungen -vom Sollwert seiner reibungswirksamen, geometrischen Abmessungen.

Zur Verdeutlichung der unterschiedlichen Spreizhöhen 29 sind zusätzlich die beiden Distanzen 30 zwischen einer Kante des Mittelteils des Führungselementes 20 und eines seiner Außenkanten dargestellt. Demnach sind die beiden in der Figur 9 gezeigten Führungselemente deutlich dicker als die beiden in der Figur 10. Ein weiterer Anhaltspunkt zum Nachweis dieses Dickenunterschiedes kann von einer Außenkante des Führungselements 20 zu der ihr am nächsten liegenden, Kante in dem der Gleitfläche 28 zugewandte Führungsbereich ersehen werden. In der Figur 9 ist hier nur ein geringer Abstand erkennbar, demgegenüber ist in der Figur 10 ein großer Abstand 31 ersichtlich.

### Bezugszeichenliste:

- 2.: 1. Reibungsdämpfer Gehäuse 2a. Gehäuselängsachse
- 3.: Befestigungsöse
- 4.: Stößel
- 5.: Befestigungsöse
- 6.: Längsrippe
- 7.: Que-rrippe
- 9.: Schmiermitteltasche
- 8.: Reibbelag
- 10.: Reibfläche
- 11.: Reibfläche
- 12.: Be- bzw. Entlüftungsloch
- 13.: Struktur
- 14.: Berührungsbereich
- 15.: Achse
- 16.: Längsrippe
- 17.: Querrippe
- 18.: Prallelement
- 19.: Prallelement 20. Führungselement
- 21.: Führungs- bzw. Gleitfläche
- 22.: Aufnahme
- 23.: Spreizkörper
- 24.: reibungswirksame Abmessung
- 25.: Anschlag
- 26.: Freihub
- 27.: Sensor
- 28.: Gleitfläche
- 29.: Spreizhöhe
- 30.: Distanz 31. Abstand

## Patentansprüche

1. Reibungsdämpfer (1), insbesondere für Trommelwaschmaschinen mit Schleudergang, mit einem Gehäuse (2) sowie einem in dem Gehäuse (2) parallel zur Gehäuselängsachse (2a) angeordneten und aus dem Gehäuse (2) herausgeführten, beweglichen Stößel (4), der an seinem im Gehäuse (2) befindlichen Ende mit einem beweglich geführten Reibbelag (8) versehen ist, wobei der Reibbelag (8) oder ein den Reibbelag (8) tragender Körper mit einer Aufnahme (22) zur Aufnahme eines Spreizkörpers (23) versehen ist, wobei der Spreizkörper (23) zur Einstellung der reibungswirksamen geometrischen Abmessung (24) und/oder zur Verspannung des Reibbelags (8) vorgesehen ist, um die Reibkraft zwischen Reibbelag und einer zugeordneten Gleitfläche zu beeinflussen, **dadurch gekennzeichnet, dass** der Reibbelag (8) am Stößel (4) beweglich angeordnet ist und dass ein Führungselement (20) unter einer Vorspannung zwischen dem Reibbelag (8) und einer ihm zugeordneten Führungs- bzw. Gleitfläche (21) angeordnet ist und dass der Spreizkörper (23) als dem Reibbelag (8) zugeordnetes Fixier- bzw. Ankerelement des Führungselementes (20) ausgebildet ist.

2. Reibungsdämpfer nach Anspruch 1, **dadurch gekennzeichnet, dass** das Gehäuse (2) im Berührungsbereich (14) mit dem Reibbelag (8) Strukturelemente (13) aufweist.

3. Reibungsdämpfer nach einem der vorgenannten Ansprüche, **dadurch gekennzeichnet, dass** am Gehäuse (2) im Berührungsbereich (14) Schmiermitteltaschen (9) ausgebildet sind.

4. Reibungsdämpfer nach einem der vorgenannten Ansprüche, **dadurch gekennzeichnet, dass** das Gehäuse (2) wärmeleitfähige Materialanteile aufweist.

5. Reibungsdämpfer nach einem der vorgenannten Ansprüche, **dadurch gekennzeichnet, dass** das Gehäuse (2) strukturverstärkende Rippen und/oder Lamellen (6, 7) aufweist.

6. Reibungsdämpfer nach einem der vorgenannten Ansprüche, **dadurch gekennzeichnet, dass** der Reibbelag (8) einstückig ausgebildet ist.

7. Reibungsdämpfer nach einem der vorgenannten Ansprüche, **dadurch gekennzeichnet, dass** das Führungselement (20) in einem Fenster (6) angeordnet ist.

8. Reibungsdämpfer nach einem der vorgenannten Ansprüche, **dadurch gekennzeichnet, dass** am bzw. im Reibbelag (8) eine Aufnahme (22) für das Führungselement (20) vorgesehen ist.

9. Reibungsdämpfer nach einem der vorgenannten Ansprüche, **dadurch gekennzeichnet, dass** die Aufnahme (22) den Körper des Reibbelags (8) abschnittsweise teilt.

10. Reibungsdämpfer nach einem der vorgenannten Ansprüche, **dadurch gekennzeichnet, dass** ein Anschlag (25) als Widerlager für ein Prallelement (18, 19) vorgesehen ist.

11. Reibungsdämpfer nach einem der vorgenannten Ansprüche, **dadurch gekennzeichnet, dass** ein Sensor (27) zur Erfassung einer Längenänderung des Reibungsdämpfers (1) vorgesehen ist.

## Claims

1. Friction damper (1), in particular for drum washing machines with a spin cycle, with a housing (2) as well as a movable plunger (4) arranged in the housing (2) parallel to the housing longitudinal axis (2a) and guided out of the housing (2), which plunger is provided at its end located in the housing (2) with a movably guided friction lining (8), whereby the friction lining (8) or a body supporting the friction lining (8) is provided with a mount (22) for mounting an expandable body (23), whereby the expandable body (23) is provided for adjusting the frictionally effective geometric dimension (24) and/or for tensioning the friction lining (8) in order to influence the frictional force between the friction lining and an assigned sliding surface, **characterised in that** the friction lining (8) is arranged movably on the plunger (4), and **in that** a guiding element (20) is arranged under pretension between the friction lining (8) and a guiding or sliding surface (21) assigned thereto, and **in that** the expandable body (23) is designed as a fixing or anchoring element of the guiding element (20) assigned to the friction lining (8).

2. Friction damper according to claim 1, **characterised in that** the housing (2) in the contact area (14) with the friction lining (8) comprises structural elements (13).

3. Friction damper according to one of the preceding claims, **characterised in that** on the housing (2) in the contact area (14) lubricant pockets (9) are formed.

4. Friction damper according to one of the preceding claims, **characterised in that** the housing (2) comprises amounts of a heat-conducting material.

5. Friction damper according to one of the preceding claims, **characterised in that** the housing (2) comprises structure-reinforcing ribs and/or lamellae (6, 7).

6. Friction damper according to one of the preceding claims, **characterised in that** the friction lining (8) is formed in one piece.

7. Friction damper according to one of the preceding claims, **characterised in that** the guiding element (20) is arranged in a window (6).

8. Friction damper according to one of the preceding claims, **characterised in that** on or in the friction lining (8) a mount (22) is provided for the guiding element (20).

9. Friction damper according to one of the preceding claims, **characterised in that** the mount (22) divides the body of the friction lining (8) into sections.

10. Friction damper according to one of the preceding claims, **characterised in that** a stop (25) is provided as an abutment for an impact element (18, 19).

11. Friction damper according to one of the preceding claims, **characterised in that** a sensor (27) is provided for detecting a change in length of the friction damper (1).

## Revendications

1. Amortisseur à friction (1), notamment pour des machines à laver à tambour fonctionnant avec essorage, comportant un boîtier (2) ainsi qu'une bielle (4), mobile, installée dans le boîtier (2), parallèlement à l'axe longitudinal (2a) du boîtier et sortant du boîtier (2), la bielle ayant à son extrémité logée dans le boîtier (2), une garniture de friction (8) guidée de manière mobile,
- la garniture de friction (8) ou un organe portant la garniture de friction (8) comportant un logement (22) pour recevoir un organe d'écartement (23),
- l'organe d'écartement (23) servant à régler la dimension géométrique (24) ayant un effet de friction et/ou à mettre en tension de la garniture de friction (8) pour influencer la force de frottement entre la garniture de friction et une surface de glissement associée,
amortisseur **caractérisé en ce que**
- la garniture de friction (8) est montée de manière mobile sur la bielle (4), et
- un élément de guidage (20) est installé sous précontrainte entre la garniture de friction (8) et une surface de guidage ou de glissement (21) associée, et
- l'organe d'écartement (23) est réalisé comme élément de fixation ou d'ancrage de l'élément de guidage (20) associé à la garniture de friction (8).

2. Amortisseur à friction selon la revendication 1,
**caractérisé en ce que**
le boîtier (2) comporte des éléments de structure (13) dans la zone de contact (14) avec la garniture de friction (8).

3. Amortisseur à friction selon l'une des revendications précédentes,
**caractérisé en ce que**
le boîtier (2) comporte des poches de lubrifiant (9) dans la zone de contact (14).

4. Amortisseur à friction selon l'une des revendications précédentes,
**caractérisé en ce que**
le boîtier (2) comporte des composants de matière thermoconductrice.

5. Amortisseur à friction selon l'une des revendications précédentes,
**caractérisé en ce que**
le boîtier (2) comporte des nervures et/ou des lamelles (6, 7) renforçant la structure.

6. Amortisseur à friction selon l'une des revendications précédentes,
**caractérisé en ce que**
la garniture de friction (8) est réalisée en une seule pièce.

7. Amortisseur à friction selon l'une des revendications précédentes,
**caractérisé en ce que**
l'élément de guidage (20) est logé dans une fenêtre (6).

8. Amortisseur à friction selon l'une des revendications précédentes,
**caractérisé par**
un logement (22) prévu sur ou dans la garniture de friction (8) pour l'élément de guidage (20).

9. Amortisseur à friction selon l'une des revendications précédentes,
**caractérisé en ce que**
le logement (22) subdivise en segments le corps de la garniture de friction (8).

10. Amortisseur à friction selon l'une des revendications précédentes,
**caractérisé par**
une butée (25) comme appui pour un élément de rebondissement (18, 19).

11. Amortisseur à friction selon l'une des revendications précédentes,
**caractérisé par**
un capteur (27) pour saisir une variation de longueur de l'amortisseur de friction (1).
